# EUROPEAN PATENT SPECIFICATION

(11) **EP 0 504 386 B1**
(45) Date of publication and mention of the grant of the patent: **11.02.1998**
(21) Application number: 91919683.2
(22) Date of filing: 15.10.1991
(51) Int. Cl.: B32B 15/08, C08L 23/08, C09J 123/08

(54) **RESIN BLENDS OF MALEIC ANHYDRIDE GRAFTS OF OLEFIN POLYMERS FOR EXTRUSION COATING ONTO METAL FOIL SUBSTRATES**
HARZMISCHUNGEN VON MALEINSÄUREANHYDRID-PFROPF-COPOLYMEREN AUF BASIS VON OLEFINPOLYMEREN ZUR EXTRUSIONSBESCHICHTUNG AUF METALLFOLIENSUBSTRATE
MELANGES DE RESINES OBTENUS DE GREFFES D'ANHYDRE MALEIQUE SUR DES POLYMERES D'OLEFINE POUR RECOUVREMENT PAR EXTRUSION DE SUBSTRATS DE FEUILLES METALLIQUES

(30) Priority: 15.10.1990 US 597630
(43) Date of publication of application: 23.09.1992
(73) Proprietor: THE DOW CHEMICAL COMPANY, Midland, Michigan 48674 (US)
(72) Inventor: TABOR, Ricky, L., Lake Jackson, TX 77566 (US); ALLEN, James, A., Lake Jackson, TX 77566 (US)
(74) Representative: Burford, Anthony Frederick
(86) International application number: PCT/US91/07719
(87) International publication number: WO 92/06844

(56) References cited:
- GB-A- 2 081 723
- GB-A- 2 113 696
- US-A- 4 397 916
- US-A- 4 460 632
- US-A- 4 684 576
- WORLD PATENTS INDEX LATEST Week 8422, Derwent Publications Ltd., London, GB; AN 84-136306

## Description

Maleic acid or maleic anhydride is grafted onto a high density polyethylene (HDPE), giving rise to succinic acid or succinic anhydride groups along the polymer chain. These grafted polymers are blended with an ungrafted linear low density polyethylene (LLDPE) to form resin blends useful in extrusion coating onto metal foil substrates.

Many uses have been disclosed for grafted olefin polymers and copolymers. These include use of a maleic anhydride grafted olefin polymer as a blend component in the sheath of a bicomponent fiber as disclosed in US-A-4,950,541.

US-A-4,684,576 discloses a blend of maleic anhydride grafted HDPE with ungrafted LLDPE with the blend being in the form of a layer adhered to at least one substrate.

US-A-4,452,942 discloses blends of X-methyl bicyclo(2.2.l)hept-5-ene-2,3-dicarboxylic acid anhydride (XMNA)-grafted LLDPE and HDPE with ungrafted olefins (e.g., LLDPE) that have such high adhesion to tin-free steel that the layers could not be separated. The comonomer in the LLDPE was not identified.

US-A-4,684,576, describes the use of blends of HDPE grafted with maleic acid or maleic anhydride to give rise to succinic acid or succinic anhydride groups along the polymer chain with other olefin polymers as an adhesive, for example, in extrusion coating of articles, as adhesive layers in films and packaging, as hot melt coatings, as wire and cable interlayers, and in other similar applications. Similar references describing adhesive blends containing HDPE grafted with unsaturated carboxylic acids, primarily for laminate structures, include US-A-4,460,632; 4,394,485; and 4,230,830 (now re-examined US-B-4,230,830) and GB-A-2,081,723 and 2,113,696.

While these references disclose adhesion of the grafted olefin polymers at room temperature and/or at elevated temperatures, these references fail to teach or describe specifically how to consistently maintain or improve adhesion of the grafted olefin polymer at elevated temperatures above 60°C. Elevated temperatures may be encountered for example in multilayer structures useful for storing and subsequently cooking foods without changing containers.

A resin blend for coating metal foil substrates for use at elevated temperatures has now been discovered. The resin blend comprises a polymer blend consisting of 3 to 50 percent of a grafted HDPE, the remaining percentage consisting of an ungrafted LLDPE.

The HDPE which is used in making the grafted HDPE (HDPEg) in accordance with the present invention has a melt index (MI) from 0.1 gm/10 min to 150 gm/10 min according to ASTM D-1238(E) (190°C/2.16 kg) and a density from 0.94 gm/cm³ to 0.965 gm/cm³, preferably from 0.945 to 0.96 gm/cm³. Prior to grafting, the HDPE is a normally solid, high molecular weight polymer prepared using a coordination-type catalyst in a process wherein ethylene is homopolymerized or wherein ethylene is copolymerized with minor amounts of higher alkenes (e.g., at least one olefinically unsaturated alkene of from C₃-C₁₂). The grafted groups are derived from reaction with maleic acid or maleic anhydride and comprise 0.01 to 5 weight percent, preferably 0.1 to 5 weight percent.

The LLDPE is an ethylene/1-octene copolymer and has a density from 0.88 gm/cm³ to 0.94 gm/cm³, preferably 0.9 gm/cm³ to 0.925 gm/cm³, and a melt index (MI) from 0.1 gm/10 min to 40 gm/10 min as measured in accordance with ASTM D-1238(E) (190°C/2.16 kg). The amount of the 1-octene may constitute 0.5 percent to 35 percent by weight of the copolymer, preferably 1 percent to 20 percent, most preferably 2 percent to 15 percent.

In accordance with a first aspect, the present invention provides a multilayer container for storing and subsequently cooking foods comprising a metal foil coated with an adhesive, characterized in that said adhesive is a resin blend comprising a polymer blend consisting of 3 to 50 weight percent of grafted high density polyethylene, the remaining percentage consisting of ungrafted linear low density polyethylene, said grafted high density polyethylene being derived from a grafting reaction with maleic acid or anhydride, and containing 0.01 to 5 weight percent of succinic acid or succinic anhydride groups, and said high density polyethylene, before grafting, having a melt index measured according to ASTM D-1238(E) (190°C/2.16 kg) from 0.1 gram/10 minutes to 150 gram/10 minutes and a density from 0.94 gram/cubic centimeter to 0.965 gram/cubic centimeter, and said ungrafted linear low density polyethylene is an ethylene/1-octene copolymer having a density from 0.88 gram/cubic centimeter to 0.94 gram/cubic centimeter and a melt index measured according to ASTM D-1238(E) (190°C/2.16 kg) from 0.1 gram/10 minutes to 40 gram/10 minutes.

In accordance with a second aspect, the present invention provides the use to improve elevated temperature adhesion between a metal foil and a resin blend coating thereon of, as said resin blend, a polymer blend consisting of 3 to 50 weight percent of grafted high density polyethylene, the remaining percentage consisting of an ungrafted linear low density polyethylene, said grafted high density polyethylene being derived from a grafting reaction with maleic acid or maleic anhydride and containing 0.01 to 5 weight percent of succinic acid or succinic anhydride groups, and said high density polyethylene, before grafting, having a melt index measured according to ASTM D-1238(E) (190°C/2.16 kg) in the range of 0.1 grams/10 minutes to 150 gram/10 minutes and a density in the range of 0.94 gram/cubic centimeter to 0.965 gram/cubic centimeter, and said ungrafted linear low density polyethylene is an ethylene/1-octene copolymer having a density from 0.88 gram/cubic centimeter to 0.94 gram/cubic centimeter and a melt index measured according to ASTM D-1238(E) (190°C/2.16 kg) in the range of 0.1 gram/10 minutes to 40 gram/10 minutes.

Preferably, the resin blend has an adhesion to an aluminum foil substrate of at least 2 kNewtons/meter at a temperature of 100°C.

The grafting of the succinic acid or succinic anhydride groups onto ethylene polymers may be done by methods described in the art, which involve reacting maleic acid or maleic anhydride in admixture with heated polymer, generally using a peroxide or free-radical initiator to expedite the grafting. Fumaric acid, when heated, gives off water and rearranges to form maleic anhydride, thus is operable in the present invention.

Grafting may be effected in the presence of oxygen, air, hydroperoxides, or other free radical initiators, or in the essential absence of these materials when the mixture of monomer and polymer was maintained under high shear in the absence of heat. A convenient method for producing the graft copolymer is the use of extrusion machinery, however, Brabender mixers or Banbury mixers, roll mills may also be used for forming the graft copolymers.

We prefer to employ a twin-screw devolatilizing extruder (such as a Werner & Pfleiderer twin-screw extruder) wherein maleic acid (or fumaric acid or maleic anhydride) is mixed and reacted with the HDPE at molten temperatures, thereby producing and extruding the grafted polymer. The so-produced grafted polymer is then blended, as desired, with LLDPE to produce the blends of this invention.

The following described methods and tests were used in testing the polymers and blends in the following Examples.

### Adhesion Testing Procedure

### Molding Specimens:

Using a compression molder having two platens set at 177°C (350°F) and two platens water cooled, a 25 mil (0.6 mm) plaque of the material to be tested was molded. An appropriate amount of the adhesive thermoplastic resin blend to be tested was placed in a 25 mil (0.6 mm) mold 23 cm by 15 cm (9 inches by 6 inches) between two sheets of Mylar polyester, which, in turn, was placed between two metal plates (for support). The support plates were in good condition with no flaws which might be molded into the specimen. The support plates containing the resin and mold were placed between the 177°C (350°F) platens of the compression molder and the platens closed and allowed to heat with no pressure for one minute. After this time period, 69 MPa (10,000 psi) pressure was applied for one minute. The support plates containing the mold and polymer were then removed and placed in the water cooled section, and the platens were raised until the middle platen of the compression molder was pushed up off of its supports. This puts a small amount of pressure on the hot polymer in the mold, and allows for proper cooling within one minute. After the one minute cooling cycle, the platens were lowered, and the mold was removed. The Mylar polyester was removed and the polymer was cut from the mold using a razor blade against a clean, hard surface.

### Adhering Test Specimens to Substrate:

A molding configuration was prepared as listed below, travelling from top to bottom:
(1.)Metal support plate
(2.)Mylar polyester sheet
(3.)Substrate
(4.)Mylar polyester Tab
(5.)Adhesive thermoplastic to be tested, resting inside of 23 cm by 15 cm (9 inches by 6 inches) mold.
(6.)Mylar polyester tab
(7.)Substrate
(8.)Mylar polyester sheet
(9.)Metal support plate

This layered system was then placed between the 177°C (350°F) platens of the compression molder, and pressed immediately (with no melting time) to 69 MPa (10,000 psi) for two minutes. After this time period, the hot support plates were removed from the heated platens of the molder and placed between the cooled platens of the molder. The ram was then raised until the middle platen was just raised off of its supports. Two minutes were allowed for cooling at which time when the mold configuration was removed from the molder. The Mylar polyester was removed from the samples to be tested.

The above described laminate was then cut into two pieces across the Mylar polyester tab, and then into one inch strips across the tab. Five 2.54 cm (one inch) specimens were pulled using an Instron testing apparatus at a rate of 5 cm (2 inches) per minute, after a 15 minute equilibration time at the temperature at which the samples were tested. Each data point reported was the average of five test specimens.

| LLDPE TYPE* | WEIGHT PERCENT MAH** in the blend | WEIGHT PERCENT MAH-grafted HDPE*** | ALUMINUM ADHESION VALUE (kNewtons/meter) | | | | |
|---|---|---|---|---|---|---|---|
| | | | -20°C | 20°C | 60°C | 100°C | 120°C |
| EO | .08 | 6.4 | 0.63 (3.6 pounds/inch) | 1.5 (8.6 pounds/inch) | 1.85 (10.6 pounds/inch) | 2.12 (12.1 pounds/inch) | 3.71 (21.2 pounds/inch) |
| EB | .08 | 6.4 | 0.95 (5.4 pounds/inch) | 1.75 (10.0 pounds/inch) | 2.47 (14.1 pounds/inch) | 1.21 (6.9 pounds/inch) | 1.07 (6.1 pounds/inch) |
| EO | .14 | 11.2 | 1.29 (7.4 pounds/inch) | 1.79 (10.2 pounds/inch) | 1.63 (9.3 pounds/inch) | 1.87 (10 7 pounds/inch) | 2.31 (13.2 pounds/inch) |
| EB | .14 | 11.2 | 1.72 (9.8 pounds/inch) | 2.17 (12.4 pounds/inch) | 3.17 (18.1 pounds/inch) | 0.81 (4.6 pounds/inch) | 1.33 (7.6 pounds/inch) |
| EO | .25 | 20.0 | 1.56 (8.9 pounds/inch) | 1.84 (10.5 pounds/inch) | 1.89 (10.8 pounds/inch) | 2.14 (12.2 pounds/inch) | 1.16 (6.6 pounds/inch) |
| EB | .25 | 20.0 | 1.73 (9.9 pounds/inch) | 1.44 (8.2 pounds/inch) | 3 (17.2 pounds/inch) | 0.56 (3.2 pounds/inch) | 0.95 (5.4 pounds/inch) |

| | | | | | | | |
|---|---|---|---|---|---|---|---|
| * EO - ethylene/1-octene LLDPE copolymer having MI = 1.0, density = 0.920 g/cm³ EB = ethylene/butene LLDPE copolymer having MI = 0.94, density = 0.921 g/cm³ | | | | | | | |
| **MAH = Maleic Anhydride | | | | | | | |
| ***HDPE properties before grafting were MI = 10, density = 0.962 g/cm³ | | | | | | | |

The data indicates that there was a surprising difference between the adhesion of aluminum foil substrate to an adhesive polymer blend consisting of HDPEg and ethylene/1-octene LLDPE copolymer, as opposed to the adhesion of aluminum foil substrate to a polymer blend consisting of HDPEg and ethylene/butene LLDPE copolymer, especially when tested at elevated temperatures (temperatures above 60°C). The difference is especially noticeable at temperatures above 80°C, particularly above 100°C.

## Claims

1. A multilayer container for storing and subsequently cooking foods comprising a metal foil coated with an adhesive, characterized in that said adhesive is a resin blend comprising a polymer blend consisting of 3 to 50 weight percent of grafted high density polyethylene, the remaining percentage consisting of ungrafted linear low density polyethylene, said grafted high density polyethylene being derived from a grafting reaction with maleic acid or anhydride, and containing 0.01 to 5 weight percent of succinic acid or succinic anhydride groups, and said high density polyethylene, before grafting, having a melt index measured according to ASTM D-1238(E) (190°C/2.16 kg) from 0.1 gram/10 minutes to 150 gram/10 minutes and a density from 0.94 gram/cubic centimeter to 0.965 gram/cubic centimeter, and said ungrafted linear low density polyethylene is an ethylene/1-octene copolymer having a density from 0.88 gram/cubic centimeter to 0.94 gram/cubic centimeter and a melt index measured according to ASTM D-1238(E) (190°C/2.16 kg) from 0.1 gram/10 minutes to 40 gram/10 minutes.

2. A container as claimed in Claim 1, wherein the grafted high density polyethylene contains 0.1 to 5 weight percent of succinic acid or succinic anhydride groups.

3. A container as claimed in Claim 1 or Claim 2, wherein said ethylene/1-octene copolymer has a density from 0.9 gm/cm³ to 0.925 gm/cm³.

4. A container as claimed in any one of the preceding claims, wherein said high density polyethylene, before grafting, has a density from 0.945 gm/cm³ to 0.96 gm/cm³.

5. A container as claimed in any one of the preceding claims, wherein said resin blend has an adhesion to an aluminum foil substrate of at least 2 kNewtons/meter at 100°C.

6. A container as claimed in any one of the preceding claims, wherein said resin blend is extrusion coated onto said metal foil.

7. A container as claimed in any one of the preceding claims, wherein the metal foil is an aluminum foil.

8. The use to improve elevated temperature adhesion between a metal foil and a resin blend coating thereon of, as said resin blend, a polymer blend consisting of 3 to 50 weight percent of grafted high density polyethylene, the remaining percentage consisting of an ungrafted linear low density polyethylene, said grafted high density polyethylene being derived from a grafting reaction with maleic acid or maleic anhydride and containing 0.01 to 5 weight percent of succinic acid or succinic anhydride groups, and said high density polyethylene, before grafting, having a melt index measured according to ASTM D-1238(E) (190°C/2.16 kg) in the range of 0.1 grams/10 minutes to 150 gram/10 minutes and a density in the range of 0.94 gram/cubic centimeter to 0.965 gram/cubic centimeter, and said ungrafted linear low density polyethylene is an ethylene/1-octene copolymer having a density from 0.88 gram/cubic centimeter to 0.94 gram/cubic centimeter and a melt index measured according to ASTM D-1238(E) (190°C/2.16 kg) in the range of 0.1 gram/10 minutes to 40 gram/10 minutes.

9. The use as claimed in Claim 8, wherein the grafted high density polyethylene contains 0.1 to 5 weight percent of succinic acid or succinic anhydride groups.

10. The use as claimed in Claim 8 or Claim 9, wherein said ethylene/1-octene copolymer has a density from 0.9 gram/cubic centimeter to 0.925 gram/cubic centimeter.

11. The use as claimed in any one of Claims 8 to 10, wherein said high density polyethylene, before grafting, has a density from 0.945 gm/cm³ to 0.96 gm/cm³.

12. The use as claimed in any one of Claims 8 to 11, wherein said polymer blend has an adhesion to an aluminum foil substrate of at least 2 kNewtons/meter at 100°C.

13. The use of a resin blend as defined in Claim 8 to coat a metal foil substrate for use at temperatures above 60°C.

14. The use as claimed in Claim 13, wherein the resin blend is as claimed in any one of Claims 9 to 12.

15. A method of storing and subsequently cooking foods at temperatures above 60°C in a container as claimed in Claim 1.

16. A method as claimed in Claim 15, wherein said container is as claimed in any one of Claims 2 to 7.

17. A method as claimed in Claim 15 or Claim 16, wherein the container is heated above 80°C to cook the food.

18. A method as claimed in Claim 17, wherein the container is heated at above 100°C to cook the food.

## Patentansprüche

1. Vielschichtbehälter zum Lagern und nachfolgenden Kochen von Lebensmittel, umfassend eine Metallfolie, die mit einem Haftmittel beschichtet ist, dadurch gekennzeichnet, daß das Haftmittel eine Kunstharzmischung ist, die eine Polymermischung umfaßt, welche aus 3 bis 50 Gewichtsprozent an gepfropftem Polyethylen hoher Dichte besteht, wobei der verbleibende Prozentsatz aus ungepfropftem linearen Polyethylen niedriger Dichte besteht, wobei weiter das gepfropfte Polyethylen hoher Dichte von einer Pfropfungsreaktion mit Maleinsäure oder -anhydrid herstammt und 0,01 bis 5 Gewichtsprozent an Bernsteinsäure oder Bernsteinsäureanhydridgruppen enthält und wobei das Polyethylen hoher Dichte vor dem Pfropfen einen Schmelzindex gemessen nach ASTM D-1238(E) (190 °C/2,16 kg) von 0,1 Gramm/10 Minuten bis 150 Gramm/10 Minuten und eine Dichte von 0,94 Gramm/Kubikzentimeter bis 0,965 Gramm/Kubikzentimeter aufweist und wobei das ungepfropfte lineare Polyethylen niedriger Dichte ein Ethylen/1-Octen-Copolymer ist, das eine Dichte von 0,88 Gramm/Kubikzentimeter bis 0,94 Gramm/Kubikzentimeter und einen Schmelzindex gemessen nach ASTM D-1238(E) (190 °C/2,16 kg) von 0,1 Gramm/10 Minuten bis 40 Gramm/10 Minuten aufweist.

2. Behälter nach Anspruch 1, wobei das gepfropfte Polyethylen hoher Dichte 0,1 bis 5 Gewichtsprozent an Bernsteinsäure oder Bernsteinsäureanhydridgruppen enthält.

3. Behälter nach Anspruch 1 oder 2, wobei das Ethylen/1-Octen-Copolymer eine Dichte von 0,9 g/cm³ bis 0,925 g/cm³ aufweist.

4. Behälter nach einem der vorhergehenden Ansprüche, wobei das Polyethylen hoher Dichte vor dem Pfropfen eine Dichte von 0,945 g/cm³ bis 0,96 g/cm³ aufweist.

5. Behälter nach einem der vorhergehenden Ansprüche, wobei die Kunstharzmischung ein Haftvermögen zu einem Aluminiumfoliensubstrat von wenigstens 2 kNewton/Meter bei 100 °C aufweist.

6. Behälter nach einem der vorhergehenden Ansprüche, wobei die Kunstharzmischung auf die Metallfolie extrusionsbeschichtet ist.

7. Behälter nach einem der vorhergehenden Ansprüche, wobei die Metallfolie eine Aluminiumfolie ist.

8. Verwendung zur Verbesserung des Haftvermögens zwischen einer Metallfolie und einer Kunstharzmischungsbeschichtung darauf bei erhöhter Temperatur, wobei die Kunstharzmischung aus einer Polymermischung besteht, die aus 3 bis 50 Gewichtsprozent an gepfropften Polyethylen hoher Dichte besteht, wobei der verbleibende Prozentsatz aus einem ungepfropften linearen Polyethylen niedriger Dichte besteht, wobei das gepfropfte Polyethylen hoher Dichte von einer Pfropfungsreaktion mit Maleinsäure oder Maleinsäureanhydrid herstammt und 0,01 bis 5 Gewichtsprozent an Bernsteinsäure oder Bernsteinsäureanhydridgruppen enthält, und das Polyethylen hoher Dichte vor dem Pfropfen einen Schmelzindex gemessen nach ASTM D-1238(E) (190 °C/2, 16 kg) im Bereich von 0,1 Gramm/10 Minuten bis 150 Gramm/10 Minuten und eine Dichte im Bereich von 0,94 Gramm/Kubikzentimeter bis 0,965 Gramm/Kubikzentimeter aufweist, und wobei das ungepfropfte lineare Polyethylen niedriger Dichte ein Ethylen/1-Octen-Copolymerist, das eine Dichte von 0,88 Gramm/Kubikzentimeter bis 0,94 Gramm/Kubikzentimeter und einen Schmelzindex gemessen nach ASTM D-1238(E) (190 °C/2, 16 kg) im Bereich von 0,1 Gramm/10 Minuten bis 40 Gramm/10 Minuten aufweist.

9. Verwendung nach Anspruch 8, wobei das gepfropfte Polyethylen hoher Dichte 0,1 bis 5 Gewichtsprozent an Bernsteinsäure oder Bernsteinsäureanhydridgruppen enthält.

10. Verwendung nach Anspruch 8 oder 9, wobei das Ethylen/1-Octen-Copolymer eine Dichte von 0,9 Gramm/Kubikzentimeter bis 0,925 Gramm/Kubikzentimeter aufweist.

11. Die Verwendung nach einem der Ansprüche 8 bis 10, wobei das Polyethylen hoher Dichte vor dem Pfropfen eine Dichte von 0,945 g/cm³ bis 0,96 g/cm³ aufweist.

12. Verwendung nach einem der Ansprüche 8 bis 11, wobei die Polymermischung ein Haftvermögen zu einem Aluminiumfoliensubstrat von wenigstens 2 kNewton/Meter bei 100 °C aufweist.

13. Verwendung einer Kunstharzmischung nach Anspruch 8, um ein Metallfoliensubstrat für die Verwendung bei Temperaturen über 60 °C zu beschichten.

14. Verwendung nach Anspruch 13, wobei die Kunstharzmischung, wie in einem der Ansprüche 9 bis 12 beansprucht, ausgebildet ist.

15. Verfahren zum Lagern und nachfolgenden Kochen von Lebensmittel bei Temperaturen über 60 °C in einem Behälter nach Anspruch 1.

16. Verfahren nach Anspruch 15, wobei der Behälter gemäß einem der Ansprüche 2 bis 7 ausgebildet ist.

17. Verfahren nach Anspruch 15 oder Anspruch 16, wobei der Behälter über 80 °C erhitzt wird, um das Lebensmittel zu kochen.

18. Verfahren nach Anspruch 17, wobei der Behälter auf über 100 °C erhitzt wird, um das Lebensmittel zu kochen.

## Revendications

1. Récipient multicouche pour le stockage et la cuisson ultérieure d'aliments comprenant une feuille métallique revêtue d'un adhésif, caractérisé en ce que ledit adhésif est un mélange de résines comprenant un mélange de polymères composé de 3 à 50 pourcent en poids de polyéthylène haute densité greffé, le pourcentage restant se composant de polyéthylène basse densité linéaire non greffé, ledit polyéthylène haute densité greffé étant dérivé d'une réaction de greffage avec l'acide ou l'anhydride maléique, et contenant 0,01 à 5 pourcent en poids de groupes acide succinique ou anhydride succinique, et ledit polyéthylène haute densité, avant greffage, ayant un indice de fluidité à l'état fondu mesuré selon la norme ASTM D-1238 (E) (190°C/2,16 kg) de 0,1 gramme/10 minutes à 150 grammes/10 minutes et une densité de 0,94 gramme/centimètre cube à 0,965 gramme/centimètre cube, et ledit polyéthylène basse densité linéaire non greffé est un copolymère éthylène/1-octène ayant une densité de 0,88 gramme/centimètre cube à 0,94 gramme/centimètre cube et un indice de fluidité à l'état fondu mesuré selon la norme ASTM D-1238 (E) (190°C/2,16 kg) de 0,1 gramme/10 minutes à 40 grammes/10 minutes.

2. Récipient selon la revendication 1, dans lequel le polyéthylène haute densité greffé contient 0,1 à 5 pourcent en poids de groupes acide succinique ou anhydride succinique.

3. Récipient selon l'une des revendications 1 ou 2, dans lequel ledit copolymère éthylène/1-octène possède une densité de 0,9 g/cm³ à 0,925 g/cm³.

4. Récipient selon l'une des revendications précédentes, dans lequel ledit polyéthylène haute densité, avant la greffe, possède une densité de 0,945 g/cm³ à 0,96 g/cm³.

5. Récipient selon l'une des revendications précédentes, dans lequel ledit mélange de résines possède une adhérence à un substrat en feuille d'aluminium d'au moins 2 kNewtons/mètre à 100°C.

6. Récipient selon l'une des revendications précédentes, dans lequel ledit mélange de résines est déposé par extrusion sur ladite feuille métallique.

7. Récipient selon l'une des revendications précédentes, dans lequel la feuille métallique est une feuille d'aluminium.

8. Utilisation pour améliorer l'adhérence à température élevée entre une feuille métallique et un revêtement de mélange de résines sur celle-ci, d'un mélange de polymères, en tant que dit mélange de résines, composé de 3 à 50 pourcent en poids de polyéthylène haute densité greffé, le pourcentage restant se composant d'un polyéthylène basse densité linéaire non greffé, ledit polyéthylène haute densité greffé étant dérivé d'une réaction de greffage avec l'acide maléique ou l'anhydride maléique et contenant 0,01 à 5 pourcent en poids de groupes acide succinique ou anhydride succinique, et ledit polyéthylène haute densité, avant la greffe, ayant un indice de fluidité à l'état fondu mesuré selon la norme ASTM D-1238 (E) (190°C/2,16 kg) est comprise entre 0,1 gramme/10 minutes et 150 grammes/10 minutes et une densité comprise entre 0,94 gramme/centimètre cube et 0,965 gramme/centimètre cube, et ledit polyéthylène basse densité linéaire non greffé est un copolymère éthylène/1-octène ayant une densité de 0,88 gramme/centimètre cube à 0,94 gramme/centimètre cube et un indice de fluidité à l'état fondu mesuré selon la norme ASTM D-1238 (E) (190°C/2,16 kg) compris entre 0,1 gramme/10 minutes et 40 grammes/10 minutes.

9. Utilisation selon la revendication 8, dans lequel le polyéthylène haute densité greffé contient 0,1 à 5 pourcent en poids de groupes acide succinique ou anhydride succinique.

10. Utilisation selon l'une des revendications 8 ou 9, dans laquelle ledit copolymère éthylène/1-octène a une densité de 0,9 gramme/centimètre cube à 0,925 gramme/centimètre.

11. Utilisation selon l'une des revendications 8 à 10, dans laquelle ledit polyéthylène haute densité, avant la greffe, possède une densité de 0,945 g/cm³ à 0,96 g/cm³.

12. Utilisation selon l'une des revendications 8 à 11, dans laquelle ledit mélange de polymères possède une adhérence à un substrat en feuille d'aluminium d'au moins 2 kNewtons/mètre à 100°C.

13. Utilisation d'un mélange de résines selon la revendication 8, pour revêtir un substrat de feuille métallique pour une utilisation à des températures supérieures à 60°C.

14. Utilisation selon la revendication 13, dans laquelle le mélange de résines est conforme à l'une des revendications 9 à 12.

15. Procédé pour le stockage et la cuisson ultérieure d'aliments à des températures supérieures à 60°C dans un récipient selon la revendication 1.

16. Procédé selon la revendication 15, dans lequel ledit récipient est conforme à l'une des revendications 2 à 7.

17. Procédé selon l'une des revendications 15 ou 16, dans lequel le récipient est chauffé au-dessus de 80°C pour cuire l'aliment.

18. Procédé selon la revendication 17, dans lequel le récipient est chauffé au-dessus de 100°C pour cuire l'aliment.
